# EUROPEAN PATENT APPLICATION

(11) **EP 0 580 319 A1**
(43) Date of publication of application: **26.01.1994**
(21) Application number: 93305304.3
(22) Date of filing: 06.07.1993
(51) Int. Cl.: F15B 15/12, B25J 9/14

(54) **Hydraulic rotary actuators for robotic applications**

(30) Priority: 21.07.1992 US 917580
(71) Applicant: THE WALT DISNEY COMPANY, Burbank, CA 91521 (US)
(72) Inventor: Johnson, Bruce S., North Hollywood, California 91605 (US); Updyke, Lance D., Simi Valley, California 93060 (US); Peterson, Michael H., Glendale, California 91201 (US)
(74) Representative: Wombwell, Francis

(57) **Abstract**

Specialized hydraulic rotary actuators (rotacs) for use in robotics are disclosed. The designs incorporate a one piece rotor (1) with no separate seals, a three piece housing (4,5) with separate housing chamber defining members, and a bearing (8) supported shaft (2) that is strong enough to be used as a structural element.

## Description

### BACKGROUND OF THE INVENTION

### 1. Field of the Invention:

The present invention relates to the field of actuators, and more specifically, to small, high performance actuators for use in robotics and other applications.

### 2. Prior Art:

In the design of certain devices, such as high performance hydraulically driven robotic figures with multiple axes of motion, there is a need for smooth rotational movement at a joint in which the range of movement is beyond what can be actuated by a conventional linear hydraulic cylinder. Furthermore, to minimize mechanical complexity and weight, it is also desirable to integrate a rotary hydraulic cylinder (rotac) into the joint, with the rotac providing the joint bearings. In this way, the rotac is direct acting as opposed to acting through some drive mechanism. Because one rotac powered joint may be supported from another rotac powered joint, it is important, particularly in human-like robotic figures, that each joint, including the associated rotac, be as compact and lightweight as possible while having sufficient output torque and speed to provide rapid acceleration, fast motion and rapid deceleration when called upon to do so. In human-like robotic figures, it is necessary to provide not only fast motion, but also slow motion, smooth stopping and even slow reversal of motion, all in a positive manner and without hesitation, overshoot or hunting.

Normally a direct drive joint rotac would be in a servo loop, being driven through a hydraulic control valve controlled in response to the difference between a time varying control signal and a feedback signal from a sensor on the joint. Stability of a joint servo loop may be provided by conventional techniques. However, to accurately control the motion of hydraulic actuators to provide smooth slow motion, smooth stopping when required, and even slow reversal of motion without hesitation, overshoot or hunting (i.e., more human-like movement), breakaway friction must be kept to a minimum. Breakaway friction, or stiction, is the force (torque for a rotary device) required to cause one part or assembly of a device to start to move or rotate relative to another part or assembly of the device. Usually the force or torque required to initiate significant motion is larger, sometimes many times larger, than the force or torque required to maintain that motion, particularly in mechanisms which are dynamically lubricated when in motion.

Hydraulic rotary actuators are commercially available from a number of vendors. A good example of a standard commercial rotac is the ROTAC/Hydro-ac® brand, which is available from the Micro-Precision Division of Textron Corporation. However, these rotacs are generally large, complex in structure and difficult to integrate into complex mechanisms of moderate size. Further, they are primarily of steel construction, thereby being relatively heavy. Moreover, due to their size and structure, they do not readily respond quickly and with the precision required for many robotic applications.

Typically, larger rotacs use some combination of elastomeric seals between the moving central shaft/vane and the stationary housing. These elastomeric seals have significant static (breakaway friction) and dynamic drag because of the necessary compression of the seals between moving parts. Under closed loop control, as these actuators slow down to approach a desired position, this seal drag tends to increase at very low speed because of the loss of the dynamic lubricating effect, and interferes with the control system's ability to find the true commanded position, causing position error and hunting. This problem is common with commercial rotary hydraulic actuators, and becomes increasingly worse as conventional actuators are scaled down in size.

However, it was the best available rotary hydraulic actuator in the prior art. For example, the standard Disney "AUDIO-ANIMATRONICS"® figures of the '60's and '70's, as well as most commercial hydraulic industrial robots, use variations of this basic design.

Two rotary actuators currently used in Disney's "AUDIO-ANIMATRONICS" figures are similar in operating principle to the prior art designs, but have been optimized for use in certain applications. As improvements, these actuators have aluminum housings and Delrin® vanes to reduce weight, and use elastomeric strips along the outer edge of the moving vanes as dynamic seals. While lighter in weight than conventional rotacs, these rotacs also exhibit substantial breakaway friction and drag.

In an attempt to overcome the problem with elastomeric seals, a non-elastomeric seal was created between the hydraulic components by fitting the parts together to precision tolerances and with fine finishes on the mating surfaces. In a commercially available rotacs, however, this construction is very complex because many combinations of surfaces join at three dimensional intersections, and every junction between parts becomes a potential leak path.

A further disadvantage of prior art rotacs is their complexity, in that they are fabricated from a large number of precision parts, making the manufacture and maintenance of these rotacs complex and expensive.

From the foregoing description, it should be apparent that there is a need for a high performance, lightweight, compact, leakproof rotary hydraulic actuator that minimizes breakaway friction and is easy to manufacture. The present invention satisfies this need and provides further related advantages.

### SUMMARY OF THE INVENTION

Specialized hydraulic rotary actuators (rotacs) for use in robotics are disclosed. The designs incorporate a one piece rotor with no separate seals, a three piece housing with separate housing chamber defining members, and a bearing supported shaft which is also strong enough to be used as a structural element. These rotacs provide the solution to problems of the prior art devices because they have lower breakaway friction, higher output torque for the size and weight, fewer parts, are relatively easy to manufacture, particularly for rotacs of modest size, and can be used as an integral part of a robotic device.

This invention addresses these problems by configuring the components to minimize the number of components and the joints therebetween, and to keep all of the interfaces between parts moving relative to each other simple, flat surfaces which can be accurately machined and easily checked. To get long wear life, one surface in every interface is plastic having low friction or having self lubricating characteristics, preferably DuPont's Delrin® AF, and the other is preferably a hard metallic surface, most preferably aluminum which has been hard anodized and then honed to a polished surface.

The rotacs of the present invention are comprised of a housing having an inner wall defining a cylindrical housing chamber of circular cross section and having flat first and second housing end surfaces perpendicular to the axis of the housing chamber and joining the housing inner wall to define a housing chamber length, a unitary rotor, preferably constructed from plastic, having a hub defining at least one circular arc surface with at least one radially outwardly extending vane extending from the hub and fitting closely within and adapted to rotate about the axis of the housing chamber, the rotor having first and second flat and parallel rotor end surfaces each radially extending from the outer end of each vane to at least an inner diameter less than the diameter of the circular arc surfaces of the rotor hub and having a length between end surfaces which is substantially equal to the housing chamber length, first and second end plates each attached to the housing and each having a flat end plate surface abutting a respective housing end surface and extending adjacent a respective rotor end surface to at least an inner diameter less than the diameter of the circular arc surfaces of the rotor hub, stationary vanes equal in number to the number of the vanes, stationary with respect to the housing and the end plates and extending between the housing inner wall and the rotor hub, and a shaft coupled to the rotor and extending through at least one of the end plates. The shaft is supported on bearings mounted to the end plates with sufficient bearing separation to provide the desired shaft rigidity about axes perpendicular to the longitudinal axis of the shaft.

The rotor is fabricated from a self lubricating plastic, with the adjacent housing and end plate surfaces being polished anodized aluminum. Each vane of the rotor has a flange-like protrusion on each side that extends along the length of and is adjacent to the housing. These protrusions are fluid pressure responsive; when fluid is introduced into the device, the protrusions are deflected towards the housing. Similarly, each stationary vane has a fluid pressure sensitive flange-like protrusion on each of its sides that extends along the length of and adjacent to the rotor hub. When fluid is introduced into the device, the pressure of the fluid causes the protrusions in the housing chamber dividing means to be deflected towards the rotor hub. The deflection of the flange-like protrusions in the vanes and housing chamber dividing means provides maximum sealing at high differential pressures for maximum acceleration and deceleration, yet minimizes breakaway friction over the substantial operating temperature range of the rotacs.

The fit between the rotor and the end plates is a close sliding fit over the entire faces of the rotor. This is achieved in a simple, yet highly repeatable manner by first machining the rotor to properly fit the honed internal diameter of the housing, then fitting the stationary vanes between the rotor and the housing, and then, with the rotor and stationary vanes held in their correct positions in the housing, facing both the rotor, stationary vanes and the housing together so that their axial lengths are matched. This provides a very close fit without requiring corresponding machining tolerances.

Rotacs of the general design and construction of the rotacs disclosed herein have been built and tested, and have exhibited excellent performance and apparent life and reliability.

It is an object of the present invention to provide a rotary actuator that uses no elastomeric or other drag-generating seals between their primary internal moving parts to minimize breakaway friction.

It is another object of the invention to provide such an actuator which is simple in design and easy to construct.

It is yet another object of the present invention to optimize the design of the rotacs so they may be used as integral structural members of a robotic assembly.

It is a further object of the invention to provide a rotary actuator which provides increased output torque and efficiency.

It is yet a further object of the invention to provide a rotary actuator that can be constructed on a smaller scale, thereby reducing the scaling effect.

These and other objects of the invention will become apparent from the Detailed Description of the Invention and appended claims, taken in conjunction with the accompanying drawings.

### BRIEF DESCRIPTION OF DRAWINGS

Figure 1 is a cross-sectional end view of a preferred embodiment of the invention showing the internal parts thereof.

Figure 2 is a cross-sectional side view of the embodiment of Figure 1, also showing the internal parts.

Figure 3 is a cross-sectional side view detail of the embodiment of Figure 1 showing the connection between the stationary vane and the end plate.

Figure 4 is another cross-sectional side view detail of the embodiment of Figure 1 showing the hydraulic fluid passageways between the stationary vane and the end plate.

Figure 5 is a cross-sectional end view of an alternate embodiment of the invention which uses a single lobe rotor for a larger angle of rotation.

Figure 6 is a cross-sectional side view of another preferred embodiment of the invention having increased bearing separation and thus increased shaft stiffness to torques on the shaft perpendicular to the axis thereof.

### DETAILED DESCRIPTION OF INVENTION

As shown in the accompanying drawings, the present invention is embodied in a rotary actuator (rotac) configured to create a leakproof hydraulic seal between its moving parts without using elastomeric seals. Sealing without elastomeric seals requires that the parts potentially defining all possible leak paths, which in a rotac include three dimensional corners, be simultaneously fitted together with virtually no clearance therebetween. In a rotac of the conventional configuration, which uses many complex parts, this type of fit would be very difficult and expensive to achieve. Also, because all of the rotac's components must repeatedly slide against each other at high speed, wearing of parts is a major problem in a conventional rotac.

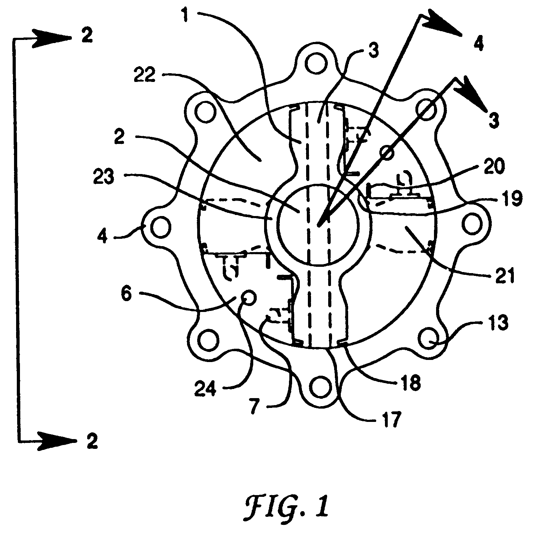

Figure 1 shows a preferred embodiment of the invention with a two-lobe rotor, which is suitable for angles of rotation up to approximately 90 degrees. The rotor 1 is machined from plastic and is attached to the shaft 2 by a pin 3 which is a press fit into the shaft and rotor. The rotor 1 and the two stationary housing chamber defining vanes 6 fit within the bore of the housing 4, with fluid chambers 22 being formed by the spaces between the rotor and the stationary vanes. The two stationary vanes 6, which are also preferably machined from the same plastic and contain the fluid ports 7, are positively located by dowel pins 24. As fluid under pressure enters the chambers 22 through the appropriate fluid ports 7, the resulting pressure between the rotor 1 and stationary vanes 6 causes the rotor to rotate, turning the shaft 2. The rotor moves through about 90 degrees to a final position 21, where it contacts the opposite faces of the stationary vanes 6.

Hydraulic sealing of the fluid chambers 22 in the present invention is accomplished by simultaneously providing a sliding fit between moving parts at three principle locations: the interface 17 between the radiused outer ends of the rotor 1 and the housing 4; the interface 19 between the radiused inner ends of the stationary vanes 6 and the hub of the rotor; and the interfaces between each face 23 of the rotor and the two end plates (not shown in Figure 1). Small slots 18, cut across the outer ends of the rotor 1, define pressure responsive flange-like protrusions at each side of the outer ends of the rotor extending along the length thereof. These pressure responsive flange-like protrusions allow the outer edges of the rotor to flex outwards under the pressure of the fluid in the chamber 22 to increase the effective sealing of the rotor against the inner periphery of the housing 4. For this purpose, the flange-like protrusions are proportioned to provide a strength and flexibility consistent with such things as the maximum pressure of the hydraulic fluid that will be used and the expected rotor and housing wear over the intended life of the rotac. Similar slots 20 defining flange-like protrusions are provided on the inner end of the stationary vanes 6. The flange-like protrusions on the rotor and stationary vanes particularly increase the pressure responsive sealing of the rotor with the housing 4 during periods of high pressure drive for high angular acceleration and deceleration of the rotac supported assembly, yet substantially relax the sealing force during periods of low pressure drive, such as during slow and slowly oscillating movements of the rotac. This has the advantageous result of providing excellent sealing for fast response, yet low friction to avoid jerky motion and hunting that would otherwise be caused by the sticking of high force and high friction seals. The flange-like protrusions also provide some flexibility to compensate for differential thermal expansion between the rotor and housing, and to compensate for rotac shaft bearing radial deflection under high static and/or dynamic loads.

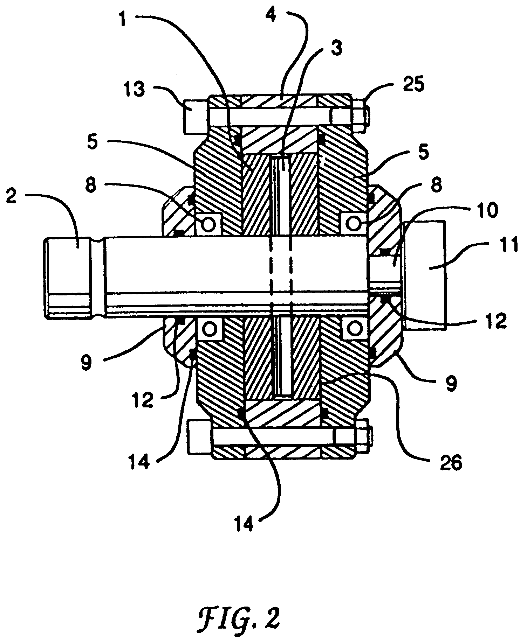

Figure 2 shows the embodiment of Figure 1 in a cross-sectional side view. The rotor 1 is surrounded by the housing 4 around its outer diameter and by the two flat end plates 5. The end plates 5 and the housing 4 are fastened together by a pattern of bolts 13 and nuts 25 around the periphery of the housing. The shaft 2 is supported by bearings 8 which are fitted into the end plates 5 from the outside and retained by the bearing caps 9. The shaft is reduced in diameter at the back end 10, where it protrudes through the bearing cap 9, and is coupled to an appropriate rotary position-sensing transducer 11. Conventional shaft seals 12 are located in the bearing caps. Static face seals 14 are located between the bearing caps 9 and the end plates 5, and between the end plates and the housing 4 to complete the rotac sealing.

The interface 26 between the rotor 1 and the end plates 5 is a close sliding fit over the entire face of the rotor. This is achieved in a simple, yet highly repeatable manner by first machining the rotor to properly fit the honed internal diameter of the housing 4, then fitting the stationary vanes 6 between the rotor and the housing, and then, with the rotor and stationary vanes accurately fixtured in the housing, facing both the rotor, stationary vanes and the housing together so that their axial lengths are matched. The precise fit in the final assembly of the rotor between the end plates 5, coupled with the substantial area and low friction between the plastic rotor and the honed surfaces of the end plates 5 and the lubrication provided by the hydraulic fluid, allows the rotor itself to act as a substantially end-play free thrust bearing for the assembly. This allows the use of unpreloaded bearings, and is highly advantageous, as otherwise the bearings would have to be very accurately located and preloaded to provide axial load support and location of the shaft and rotor within the housing. Thus use of the rotor itself for axial support of the shaft eliminates the need for extremely accurate location of the bearings and the accurate preloading of the bearings, and further of course avoids the need for flexible rotor seals that otherwise could be required to fill spaces resulting from tolerances in bearing axial position relative to the housing and rotor.

It will be noted from Figure 2 that both faces of the rotor are flat over their entire end surfaces, and that except for the seal grooves and bolt holes, the corresponding faces of the housing and end plates are flat over their entire faces also. However this is not an absolute requirement of the invention provided such surfaces are flat over certain important regions thereof. For instance, it is important that at least an annular portion of each housing end surface joining on its inner diameter the inner diameter of the housing be flat to positively and directly define the length of the housing chamber. It is also important that each end plate be flat from an outer diameter exceeding the rotor diameter (to properly mate with the respective flat end surface of the housing defining one end of the housing chamber) to a diameter less than the diameter of the rotor hub to seal against the end surfaces of the stationary vanes and rotor. Similarly, the rotor need only have flat end surfaces from its outer diameter to a diameter less that the diameter of the rotor hub to properly seal against the adjacent end plate surfaces, and the rotor and stationary vanes may have one or more depressions in one or both end surfaces thereof provided the integrity of the respective sealing surface is not broken, and in the case of the rotor, provided an adequate area is left to satisfactorily act as the thrust bearing for the assembly.

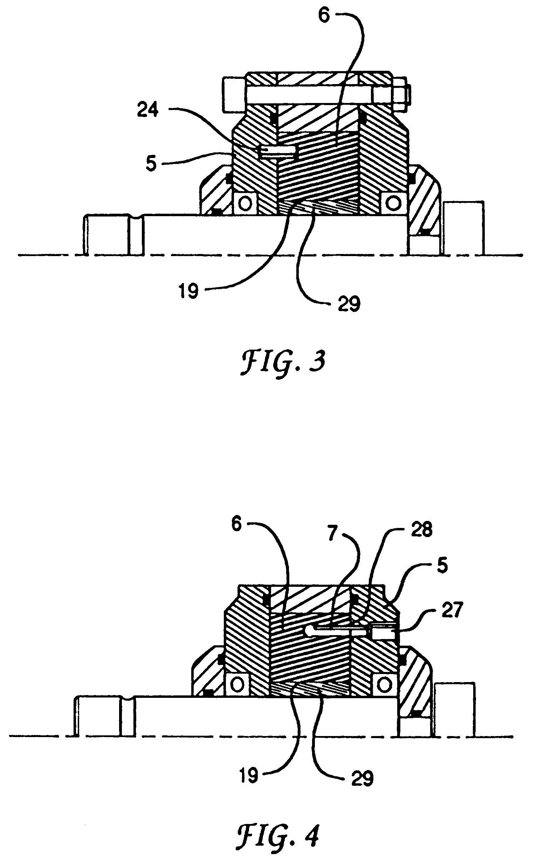

Figure 3 shows a cross-section of the embodiment of Figure 1 through the center of the stationary vane 6, where a dowel pin 24 locates the stationary vane to the end plate 5. The interface 19 between the stationary vane 6 and the hub 29 of the rotor is a sliding fit. Figure 4 shows a cross-section through the stationary vane 6, where a fluid port 7 in the stationary vane intersects a fluid port 27 in the end plate 5. A small seal 28 fits into a recess in the end plate 5 to prevent fluid leakage.

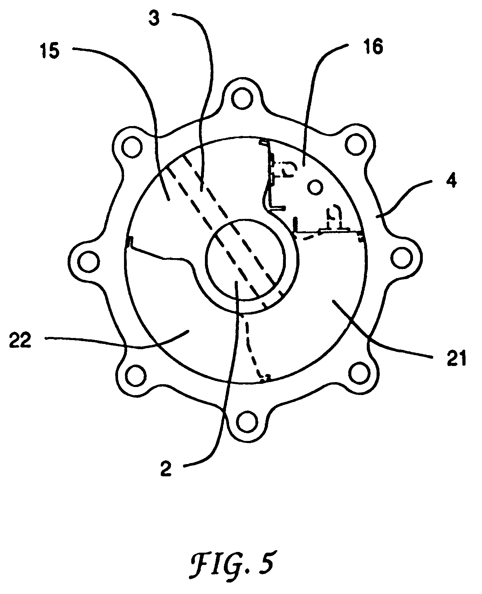

Figure 5 shows another embodiment of the invention which uses a one-lobe rotor 15 and a single stationary vane 16. The rotor 15 is attached to the shaft 2 by a pin 3, and fits within the housing 4. The rotor 15 will rotate approximately 270 degrees to a final position 21, but with only one hydraulic chamber 22 formed, this embodiment has half the torque of the two-lobe version for a given size rotac.

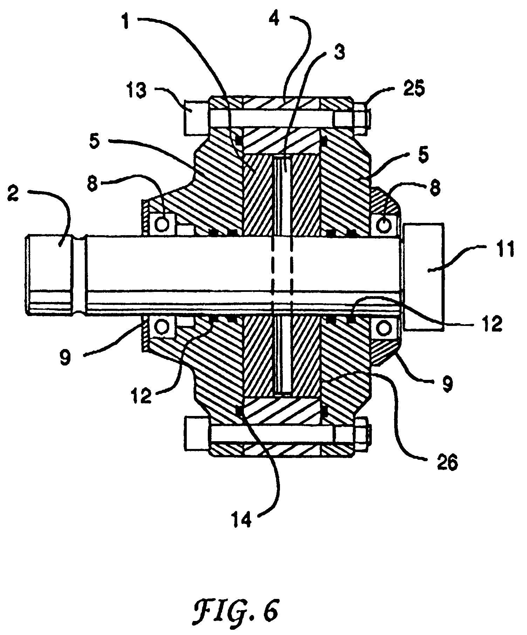

As an alternative to the designs disclosed herein, it may be desirable to reverse the axial position of the bearings and shaft seals, thereby further physically separating the bearings. Such an embodiment may be seen in Figure 6. While this removes the bearings from the lubricative hydraulic fluid, permanently lubricated and substantially sealed bearings are available, and the greater separation of the bearings significantly increases the stiffness of the bearing support with respect to moments between the shaft and housing perpendicular to the axis of the rotac.

While preferred and alternate embodiments of the present invention have been disclosed and described herein, it will be obvious to those skilled in the art that various changes in form and detail may be made therein without departing from the spirit and scope thereof.

## Claims

1. A rotary actuator comprising:
a housing having an inner wall defining a cylindrical housing chamber of circular cross section, said housing having a flat first housing end surface and a flat second housing end surface, said first and second end surfaces being perpendicular to the axis of said housing chamber and joining on their inner diameters said housing inner wall to define a housing chamber length;
a unitary plastic rotor having a hub defining at least one circular arc surface with at least one radially outwardly extending vane extending from said hub and fitting closely within, and adapted to rotate about said axis of, said housing chamber, said rotor having first and second flat and parallel rotor end surfaces, each radially extending from the outer end of each said vane to at least an inner diameter less than the diameter of said circular arc surfaces of said rotor hub, said rotor having a length between end surfaces which is substantially equal to said housing chamber length;
first and second end plates, each attached to said housing, each end plate having a flat end plate surface abutting a respective housing end surface and extending adjacent a respective rotor end surface to at least an inner diameter less than the diameter of said circular arc surfaces of said rotor hub;
housing chamber dividing means equal in number to the number of said vanes and stationary with respect to said housing and said end plates, said housing chamber dividing means extending between said housing inner wall and said rotor hub; and,
a shaft coupled to said rotor and extending through at least one of said end plates.

2. The rotary actuator as recited in claim 1 wherein said shaft is supported from said first end plate by a first bearing and from said second end plate by a second bearing.

3. The rotary actuator as recited in claim 2 wherein said rotor is a self lubricating plastic material and the surfaces of said housing and said end plates adjacent said rotor are polished metal.

4. The rotary actuator of claim 3 wherein said polished metal is polished anodized aluminum.

5. The rotary actuator of any one of claims 1 through 4 further comprised of rotary seal means for preventing leakage between said shaft and each said end plate through which said shaft passes.

6. The rotary actuator of claim 5 wherein said seal means is positioned between said first and second bearings.

7. The rotary actuator of claim 5 wherein said seal means is positioned axially beyond said first and second bearings.

8. The rotary actuator of claim 5 wherein said bearings are substantially unpreloaded and said rotor is axially restrained by said rotor, whereby said bearings provide radial support of said shaft and the fit of said rotor between said end plates provides axial support for said shaft.

9. The rotary actuator of claim 8 wherein said fit of said rotor between said end plates is achieved by machining at least part of said rotor, said housing chamber dividing means and said housing together so that the length of said rotor is matched to the length of the respective said housing.

10. A rotary actuator comprising:
a housing having an inner wall defining a cylindrical housing chamber of circular cross section, said housing having a flat first housing end surface and a flat second housing end surface, said first and second end surfaces being perpendicular to the axis of said housing chamber and joining on their inner diameters said housing inner wall to define a housing chamber length;
a unitary rotor having a hub defining at least one circular arc surface with at least one radially outwardly extending vane fitting closely within, and adapted to rotate about said axis of, said housing chamber, each said vane having a flange-like protrusion on each side thereof extending along the length of and adjacent said housing and being fluid pressure responsive to deflect toward said housing, said rotor having first and second flat rotor end surfaces, each radially extending from the outer end of each said vane to at least an inner diameter less than the diameter of said circular arc surfaces of said rotor hub, said rotor having a length between end surfaces which is substantially equal to said housing chamber length;
first and second end plates, each attached to said housing, each end plate having a flat end plate surface abutting a respective housing end surface and extending adjacent a respective rotor end surface to at least an inner diameter less than the diameter of said circular arc surfaces of said rotor hub;
housing chamber dividing means equal in number to the number of said vanes and stationary with respect to said housing and said end plates, said housing chamber dividing means extending between said housing inner wall and and said rotor hub, each said housing chamber dividing means having a flange-like protrusion on each side thereof extending along the length of and adjacent said rotor hub and being fluid pressure responsive to deflect toward said rotor hub; and,
a shaft coupled to said rotor and extending through at least one of said end plates.

11. The rotary actuator as recited in claim 10 wherein said shaft is supported from said first end plate by a first bearing and from said second end plate by a second bearing.

12. The rotary actuator as recited in claim 11 wherein said rotor is a self lubricating plastic material and the surfaces of said housing and said end plates adjacent said rotor are polished metal.

13. The rotary actuator of claim 12 wherein said polished metal is polished anodized aluminum.

14. The rotary actuator of any one of claims 10 through 13 further comprised of rotary seal means for preventing leakage between said shaft and each said end plate through which said shaft passes.

15. The rotary actuator of claim 14 wherein said seal means is positioned between said first and second bearings.

16. The rotary actuator of claim 14 wherein said seal means is positioned axially beyond said first and second bearings.

17. The rotary actuator of claim 14 wherein said bearings are substantially unpreloaded and said rotor is axially restrained by said rotor, whereby said bearings provide radial support of said shaft and the fit of said rotor between said end plates provides axial support for said shaft.

18. The rotary actuator of claim 17 wherein said fit of said rotor between said end plates is achieved by machining at least part of said rotor, said housing chamber dividing means and said housing together so that the length of said rotor is matched to the length of the respective said housing.

19. A rotary actuator comprising:
a housing having an inner wall defining a cylindrical housing chamber of circular cross section;
a unitary self-lubricating rotor having a hub defining at least one circular arc surface with at least one radially outwardly extending vane extending from said hub and fitting closely within, and adapted to rotate about the axis of, said housing chamber;
first and second end plates, each attached to said housing;
housing chamber dividing means equal in number to the number of said vanes and stationary with respect to said housing and said end plates; and,
a shaft coupled to said rotor and extending through at least one of said end plates.

20. The rotary actuator as recited in claim 19 wherein said shaft is supported from said first end plate by a first bearing and from said second end plate by a second bearing.

21. The rotary actuator as recited in claim 20 wherein said rotor is a self lubricating plastic material and the surfaces of said housing and said end plates adjacent said rotor are polished metal.

22. The rotary actuator of claim 21 wherein said polished metal is polished anodized aluminum.

23. The rotary actuator of any one of claims 19 through 22 further comprised of rotary seal means for preventing leakage between said shaft and each said end plate through which said shaft passes.

24. The rotary actuator of claim 23 wherein said seal means is positioned between said first and second bearings.

25. The rotary actuator of claim 23 wherein said seal means is positioned axially beyond said first and second bearings.

26. The rotary actuator of claim 23 wherein said bearings are substantially unpreloaded and said rotor is axially restrained by said rotor, whereby said bearings provide radial support of said shaft and the fit of said rotor between said end plates provides axial support for said shaft.

27. The rotary actuator of claim 26 wherein said fit of said rotor between said end plates is achieved by machining at least part of said rotor, said housing chamber dividing means and said housing together so that the length of said rotor is matched to the length of the respective said housing.
